# EUROPEAN PATENT APPLICATION

(11) **EP 3 885 323 A1**
(43) Date of publication of application: **29.09.2021**
(21) Application number: 20188060.6
(22) Date of filing: 28.07.2020
(51) Int. Cl.: C02F 1/44, F03D 1/00, F03D 7/00, F03D 7/02, F03D 9/28, F03D 15/00, C02F 103/08

(54) **A SEAWATER DESALINATION SYSTEM DIRECTLY DRIVEN BY HYDRAULIC FAN**

(30) Priority: 26.03.2020 CN 202010225623
(71) Applicant: Qinhuangdao Zenmax Hydraulic Equipments Co., Ltd., Qinhuangdao, Hebei 066000 (CN)
(72) Inventor: LI, Chenguang, Qinhuangdao, Hebei 066000 (CN); SUN, Shaobo, Qinhuangdao, Hebei 066000 (CN); CUI, Shaojian, Qinhuangdao, Hebei 066000 (CN)
(74) Representative: Winter, Brandl - Partnerschaft mbB

(57) **Abstract**

Disclosed in the present invention is a seawater desalination system directly driven by a hydraulic fan, comprising a wind power apparatus, a variable displacement motor and a hydraulic pump; wherein the wind power apparatus is connected to the hydraulic pump, the hydraulic pump is connected to the variable displacement motor by means of a hydraulic line, and the variable displacement motor is respectively connected to a seawater desalination equipment and an electric generator on the ground, thereby converting wind energy generated by the wind power apparatus into hydraulic energy, and transmitting the hydraulic energy to the seawater desalination equipment and the electric generator by means of the variable displacement motor and the hydraulic pump, so that mechanical energy output by the variable displacement motor and electrical energy generated by the electric generator enable the seawater desalination system to be used independently in places without electricity such as islands or offshore platforms. The present invention has neither conversion of the electric energy, so it saves energy; nor electrical conversion of traditional wind power such as rectification, frequency conversion, inversion and boosting, so the structure is simpler, especially suitable for islands and offshore platforms.

## Description

### Field of the Invention

The present invention relates to a seawater desalination system in the field of seawater desalination, in particular to a seawater desalination system directly driven by a hydraulic fan. The system converts wind energy into hydraulic energy, then inputs the hydraulic energy into a seawater desalination equipment, thus, there is no conversion of electric energy involved. Therefore, the system becomes a new design with considerable practicability and progressiveness, which is suitable for widespread popularization and application in the industry.

### Background

At present, water shortage becomes a global problem, however, the cost of seawater desalination is too high because of large amount of electricity consumed by seawater desalination, so for desalination plants that have been built, people can afford to build them, but cannot afford to use them. The present invention uses green energy (wind energy) for seawater desalination, which can greatly reduce the cost of seawater desalination operation.

At present, the reverse osmosis membrane method is one of the mainstream seawater projects in the world. The reverse osmosis membrane method requires a high-pressure water pump to continuously pressurize the seawater until the pressure of the seawater exceeds the osmotic pressure, then fresh water will be separated from the seawater through the osmosis membrane. Nowadays, islands, offshore platforms and coastal cities have achieved seawater desalination by means of seawater desalination equipment driven by wind power and solar power. However, the conversion efficiency of the wind power and the solar power is low, and electrical conversion such as rectification, frequency conversion, inversion and boosting, is required by the wind power and the solar power to make their electricity generated meet the requirement of the normal operation of the seawater desalination equipment. Therefore, using the wind power and the solar power has the disadvantages of high cost, large occupation area and inflexible layout.

In view of the above-mentioned defects of the existing seawater desalination system, after continuous research and design, as well as repeated sample making and improvements, the designer finally created the present invention with practical value.

### Summary of the invention

One object of the present invention is to overcome the defects of low conversion efficiency of wind power and solar power in the existing seawater desalination system, so as to provide a seawater desalination system directly driven by a hydraulic fan with a novel structure. The technical problem to be solved is to convert wind energy into hydraulic energy, and then input the hydraulic energy into a seawater desalination equipment, thus, there is no conversion of electric energy involved, which improves the efficiency and reduces the loss of energy, thereby being more suitable for practical use.

Another object of the present invention is to provide a seawater desalination system directly driven by a hydraulic fan, the technical problem to be solved is that the system does not require electrical conversion such as rectification, frequency conversion, inversion, boosting, etc., so it has low construction cost and small occupation area, thereby being more suitable for practical use.

Still another object of the present invention is to provide a seawater desalination system directly driven by a hydraulic fan, the technical problem to be solved is to make layout more flexible, widely applicable to various types of seawater desalination projects, thereby being more suitable for practical use.

The objects of the present invention and the solutions to the technical problems are achieved by the following technical solutions. According to the present invention, a seawater desalination system directly driven by a hydraulic fan, comprising a wind power apparatus, further comprising a variable displacement motor and a hydraulic pump; wherein the wind power apparatus is connected to the hydraulic pump, the hydraulic pump is connected to the variable displacement motor by means of a hydraulic line, and the variable displacement motor is respectively connected to a seawater desalination equipment and an electric generator on the ground, thereby converting wind energy generated by the wind power apparatus into hydraulic energy, and transmitting the hydraulic energy to the seawater desalination equipment and the electric generator by means of the variable displacement motor and the hydraulic pump, so that mechanical energy output by the variable displacement motor and electrical energy generated by the electric generator enable the seawater desalination system to be used independently in places without electricity such as islands or offshore platforms.

The objects of the present invention and the solutions to the technical problems are further achieved by the following technical solutions.

The aforementioned seawater desalination system directly driven by the hydraulic fan, wherein the hydraulic pump is a low-speed large-displacement hydraulic pump; wherein the wind power apparatus is connected to the low-speed large-displacement hydraulic pump by means of a connecting shaft, the low-speed large-displacement hydraulic pump is connected to the variable displacement motor by means of the hydraulic line, and the variable displacement motor is respectively connected to the seawater desalination equipment and the electric generator on the ground; the low-speed large-displacement hydraulic pump is driven by the wind power apparatus, and the variable displacement motor is driven by means of the hydraulic energy to output the mechanical energy and the electrical energy, so as to directly drive the seawater desalination equipment and the electric generator on the ground.

The aforementioned seawater desalination system directly driven by the hydraulic fan, wherein the system further comprises a nacelle, a rotating joint, a windward equipment and a tower; the housing of the low-speed large-displacement hydraulic pump is connected to the nacelle, the lower part of the nacelle is connected to the tower and the nacelle can rotate on the tower; the windward equipment is connected to the nacelle, and the nacelle is driven to rotate by means of the windward equipment; the upper part of the rotating joint is connected to the nacelle, and the rotating joint can rotate along with the nacelle.

The aforementioned seawater desalination system directly driven by the hydraulic fan, wherein the system further comprises: a speed sensor, a flushing pump set and an oil tank;
wherein there are two variable displacement motors, one of which is a primary high-speed variable displacement motor, and the other is a secondary high-speed variable displacement motor;
the low-speed large-displacement hydraulic pump is connected with four hydraulic lines, which respectively are a pump output hydraulic line, a pump drainage hydraulic line, a pump flushing hydraulic line, and a pump input hydraulic line; the hydraulic lines below the rotating joint comprises a motor input hydraulic line, a motor drainage hydraulic line, a motor flushing hydraulic line, and a motor output hydraulic line; wherein the pump output hydraulic line, the pump drainage hydraulic line, the pump flushing hydraulic line, and the pump input hydraulic line above the rotating joint respectively communicate with the motor input hydraulic line, the motor drainage hydraulic line, and the motor flushing hydraulic line and the motor output hydraulic line by means of the rotating joint; wherein the four hydraulic lines below the rotating joint, namely the motor input hydraulic line, the motor drainage hydraulic line, the motor flushing hydraulic line, and the motor output hydraulic line, can be divided into 2 sets of branches on the ground;
one branch of one set of branches is the motor input hydraulic line connected to the primary high-speed variable displacement motor, which is a primary circuit; wherein the primary high-speed variable displacement motor of the primary circuit is directly connected to the seawater desalination equipment to drive the seawater desalination equipment; the other branch is the motor input hydraulic line connected to the secondary high-speed variable displacement motor, which is a secondary circuit; wherein one end of an output shaft of the secondary high-speed variable displacement motor of the secondary circuit is connected to the speed sensor, and the other end of the output shaft of the secondary high-speed variable displacement motor is connected to the electric generator; the motor flushing hydraulic line is connected to the flushing pump set, the flushing pump set is responsible for flushing all the primary high-speed variable displacement motor, the secondary high-speed variable displacement motor and the low-speed large-displacement hydraulic pump; the motor drainage hydraulic line is directly connected to the oil tank on the ground, and all return oil of the primary high-speed variable displacement motor, the secondary high-speed variable displacement motor and the low-speed large-displacement hydraulic pump is directly returned to the oil tank.

The aforementioned seawater desalination system directly driven by the hydraulic fan, wherein the windward equipment comprises a motor reducer and a set of turbine worms; the motor reducer drives the turbine worms, the turbines are connected to the tower by means of bolts, and the worms are installed in the nacelle together with the motor reducer; when the nacelle needs to be rotated, the motor reducer drives the worms to rotate; when the worms rotate, they will drive the nacelle to rotate relative to the tower; when the wind direction changes and the nacelle can rotate on the tower, the windward equipment can drive the nacelle to rotate to a best windward angle, keeping the nacelle in a windward direction.

Compared with the prior art, the present invention has obvious advantages and beneficial effects. With the above technical solutions, it has at least the following advantages.
1. The present invention converts wind energy into mechanical energy, then into hydraulic energy, next into mechanical energy, and finally inputs into the seawater desalination equipment, thus there is no conversion of electrical energy involved, which reduces the waste of energy and achieves the effect of energy saving.
2. The seawater desalination equipment of the present invention is directly connected to the hydraulic fan, without the electrical conversion links of traditional wind power such as rectification, frequency conversion, inversion, boosting, etc., so the structure is simpler and more direct.
3. For the small-scale seawater desalination equipment of the present invention, all the equipment on the ground can be installed in containers, which makes the site layout of the hydraulic fan desalination project more flexible, especially suitable for islands, offshore platforms, etc.
4. In the inside of the nacelle of the existing wind power, there are a gear speed increaser, an electric generator, an electrical control cabinet, etc., while in the inside of the nacelle of the present invention, there is only one low-speed large-displacement hydraulic pump, which has lighter weight, simpler structure and smaller nacelle than the existing wind power type nacelle.
5. The structure of the present invention is simple, and the manufacturing cost is relatively reduced, so that the cost can be greatly reduced and the economic benefit can be improved; in the aspect of practicality and cost-effectiveness of the use, the present invention is fully indeed in line with the needs of industrial development, and has considerable industrial utilization value.

The above description is only an overview of the technical solutions of the present invention. In order to make a clearer understanding of the technical means of the present invention, it can be implemented according to the content of the Specification, and to make the above and other objects, features and advantages more obvious and understandable, the present invention will be further described below in detail with reference to the drawings in combination with the preferred embodiments.

### Description of the Drawings

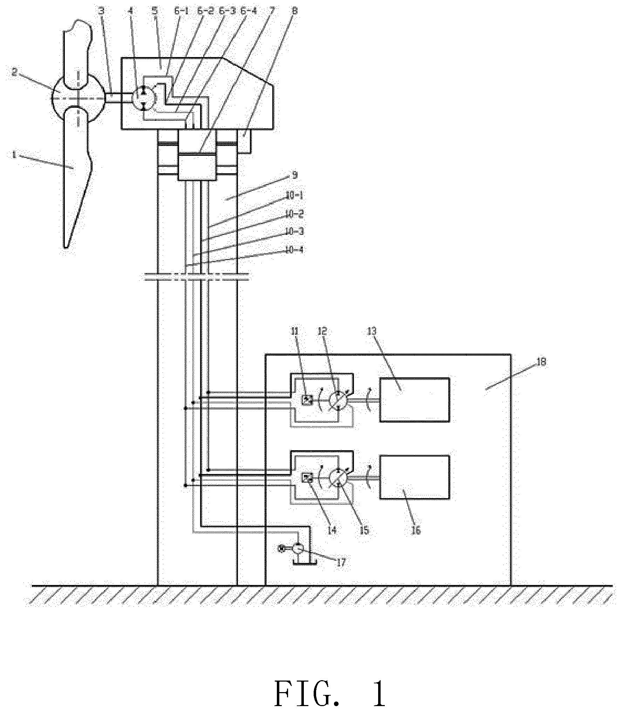

Fig. 1 is a stereogram of the appearance of the combined structure of the present invention.

In the figure: 1- blade, 2- hub, 3- connecting shaft, 4- low-speed large-displacement hydraulic pump, 5- nacelle, 6-1- pump output hydraulic line, 6-2-pump drainage hydraulic line, 6-3- pump flushing hydraulic line, 6-4- pump input hydraulic line, 7- rotating joint, 8- windward equipment, 9- tower, 10-1- motor input hydraulic line, 10-2- motor drainage hydraulic line, 10-3- motor flushing hydraulic line, 10-4- motor output hydraulic line, 11- speed sensor, 12- primary high-speed variable displacement motor, 13- seawater desalination equipment, 14- speed encoder, 15- secondary high-speed variable displacement motor, 16-electric generator, 17- flushing pump set, 18- container.

### Embodiments

In order to further illustrate the technical means adopted by the present invention to achieve the intended objects of the invention and functions, the specific embodiments, structures, features and functions of a seawater desalination system directly driven by a hydraulic fan according to the present invention will be further described below in detail with reference to the drawings in combination with the preferred embodiments.

As shown in Fig. 1, a seawater desalination system directly driven by a hydraulic fan in a preferred embodiment of the present invention, mainly comprising: a wind power apparatus, a variable displacement motor and a hydraulic pump. The wind power apparatus is connected to the hydraulic pump, the hydraulic pump is connected to the variable displacement motor by means of a hydraulic line, and the variable displacement motor is respectively connected to a seawater desalination equipment 13 and an electric generator 16 on the ground, thereby converting wind energy generated by the wind power apparatus into hydraulic energy, and transmitting the hydraulic energy to the seawater desalination equipment 13 and the electric generator 16 by means of the variable displacement motor and the hydraulic pump, so that mechanical energy output by the variable displacement motor and electrical energy generated by the electric generator 16 enable the seawater desalination system to be used independently in places without electricity such as islands or offshore platforms.

The seawater desalination system directly driven by the hydraulic fan in the preferred embodiment of the present invention, further comprising a nacelle 5, a rotating joint 7, a windward equipment 8, a tower 9, a speed sensor 14, a flushing pump set 17 and an oil tank. The lower part of the nacelle 5 is connected to the tower 9 and the nacelle 5 can rotate on the tower 9. The upper part of the rotating joint 7 is connected to the nacelle 5, and the rotating joint 7 can rotate along with the nacelle 5. The windward equipment 8 is connected to the nacelle 5, and the nacelle 5 is driven to rotate by means of the windward equipment 8.

The hydraulic pump is a low-speed large-displacement hydraulic pump 4, and the housing of the low-speed large-displacement hydraulic pump 4 is connected to the nacelle 5. The wind power apparatus is connected to the low-speed large-displacement hydraulic pump 4 by means of a connecting shaft. The low-speed large-displacement hydraulic pump 4 is connected to the variable displacement motor by means of the hydraulic line. The variable displacement motor is respectively connected to the seawater desalination equipment and the electric generator on the ground. The low-speed large-displacement hydraulic pump is driven by the wind power apparatus, so as to convert wind power into hydraulic energy. The variable displacement motor is driven by means of the hydraulic energy to output the mechanical energy and the electrical energy, so as to directly drive the seawater desalination equipment 13 and the electric generator 16 on the ground.

The hydraulic lines comprise a pump output hydraulic line 6-1, a pump drainage hydraulic line 6-2, a pump flushing hydraulic line 6-3, and a pump input hydraulic line 6-4, as well as a motor input hydraulic line 10-1, a motor drainage hydraulic line 10-2, a motor flushing hydraulic line 10-3, and a motor output hydraulic line 10-4. There are two variable displacement motors, one of which is a primary high-speed variable displacement motor 12, and the other is a secondary high-speed variable displacement motor 15. The wind power apparatus comprises a blade 1 and a hub 2.

The blade 1 is connected to the hub 2 by means of bolts. The hub 2 is connected to an input shaft of the low-speed large-displacement hydraulic pump 4 by means of a connecting shaft 3. The low-speed large-displacement hydraulic pump 4 is connected with four hydraulic lines, which respectively are a pump output hydraulic line 6-1, a pump drainage hydraulic line 6-2, a pump flushing hydraulic line 6-3, and a pump input hydraulic line 6-4. The four hydraulic lines respectively communicate with the motor input hydraulic line 10-1, the motor drainage hydraulic line 10-2, the motor flushing hydraulic line 10-3 and the motor output hydraulic line 10-4 by means of the rotating joint 7. The pump output hydraulic line 6-1 is connected to the motor input hydraulic line 10-1, the pump drainage hydraulic line 6-2 is connected to the motor drainage hydraulic line 10-2, the pump flushing hydraulic line 6-3 is connected to the motor flushing hydraulic line 10-3, and the pump input hydraulic line 6-4 is connected to the motor flushing hydraulic line 10-4.

The windward equipment 8 in the embodiment comprises a motor reducer and a set of turbine worms. The motor reducer drives the turbine worms. The turbines are connected to the tower 9 by means of bolts. The worms are installed in the nacelle 5 together with the motor reducer. When the nacelle 5 needs to be rotated, the motor reducer drives the worms to rotate. When the worms rotate, they will drive the nacelle 5 to rotate relative to the tower 9. When the wind direction changes and the nacelle 5 can rotate on the tower 9, the windward equipment 8 can drive the nacelle 5 to rotate to a best windward angle, keeping the nacelle 5 in a windward direction.

As shown in Fig. 1, the four hydraulic lines below the rotating joint 7 can be divided into 2 sets of branches on the ground. One set of branches is connected to the primary high-speed variable displacement motor 12, which is a primary circuit, responsible for driving the seawater desalination equipment. One end of an output shaft of the primary high-speed variable displacement motor 12 is connected to the speed sensor 11, and the other end of the output shaft of the primary high-speed variable displacement motor 12 is connected to the seawater desalination equipment 13. The other set of branches is connected to the secondary high-speed variable displacement motor 15, which is a secondary circuit. One end of an output shaft of the secondary high-speed variable displacement motor 15 is connected to the speed sensor 14, and the other end of the output shaft of the secondary high-speed variable displacement motor 15 is connected to the electric generator 16. The motor flushing hydraulic line 10-3 is connected to the flushing pump set 17. The flushing pump set 17 is responsible for flushing all the primary high-speed variable displacement motor 12, the secondary high-speed variable displacement motor 15 and the low-speed large-displacement hydraulic pump 4. The motor drainage hydraulic line 10-2 is directly connected to the oil tank on the ground, and all return oil of the primary high-speed variable displacement motor 12, the secondary high-speed variable displacement motor 15 and the low-speed large-displacement hydraulic pump 4 is directly returned to the oil tank. The container 18 is used for carrying ground equipment.

The above are only the preferred embodiments of the present invention and do not limit the present invention in any form. Although the present invention has been disclosed in the preferred embodiments as above, it is not intended to limit the present invention. Anyone skilled in the art may use the above technical contents to make a number of changes or modifications as equivalent embodiments with equivalent changes without departing from the technical solutions of the present invention. However, any simple modifications, equivalent changes, and modifications to the above embodiments in accordance with the technical solutions of the present invention, which are not departed from the contents of the technical solutions of the invention, shall still fall within the protection scope of the technical solutions of the present invention.

## Claims

1. A seawater desalination system directly driven by a hydraulic fan, comprising a wind power apparatus; wherein the system further comprises a variable displacement motor and a hydraulic pump; wherein the wind power apparatus is connected to the hydraulic pump, the hydraulic pump is connected to the variable displacement motor by means of a hydraulic line, and the variable displacement motor is respectively connected to a seawater desalination equipment (13) and an electric generator (16) on the ground, thereby converting wind energy generated by the wind power apparatus into hydraulic energy, and transmitting the hydraulic energy to the seawater desalination equipment (13) and the electric generator (16) by means of the variable displacement motor and the hydraulic pump, so that mechanical energy output by the variable displacement motor and electrical energy generated by the electric generator (16) enable the seawater desalination system to be used independently in places without electricity such as islands or offshore platforms.

2. The seawater desalination system directly driven by the hydraulic fan according to claim 1, wherein the hydraulic pump is a low-speed large-displacement hydraulic pump (4); wherein the wind power apparatus is connected to the low-speed large-displacement hydraulic pump (4) by means of a connecting shaft, the low-speed large-displacement hydraulic pump (4) is connected to the variable displacement motor by means of the hydraulic line, and the variable displacement motor is respectively connected to the seawater desalination equipment and the electric generator on the ground; the low-speed large-displacement hydraulic pump (4) is driven by the wind power apparatus, and the variable displacement motor is driven by means of the hydraulic energy to output the mechanical energy and the electrical energy, so as to directly drive the seawater desalination equipment (13) and the electric generator (16) on the ground.

3. The seawater desalination system directly driven by the hydraulic fan according to claim 1 or 2, wherein the system further comprises a nacelle (5), a rotating joint (7), a windward equipment (8) and a tower (9); the housing of the low-speed large-displacement hydraulic pump (4) is connected to the nacelle (5), the lower part of the nacelle (5) is connected to the tower (9) and the nacelle (5) can rotate on the tower (9); the windward equipment (8) is connected to the nacelle (5), and the nacelle (5) is driven to rotate by means of the windward equipment (8); the upper part of the rotating joint (7) is connected to the nacelle (5), and the rotating joint (7) can rotate along with the nacelle (5).

4. The seawater desalination system directly driven by the hydraulic fan according to claim 1 or 2, wherein the system further comprises: a speed sensor (14), a flushing pump set (17) and an oil tank;
wherein there are two variable displacement motors, one of which is a primary high-speed variable displacement motor (12), and the other is a secondary high-speed variable displacement motor (15);
the low-speed large-displacement hydraulic pump (4) is connected with four hydraulic lines, which respectively are a pump output hydraulic line (6-1), a pump drainage hydraulic line (6-2), a pump flushing hydraulic line (6-3), and a pump input hydraulic line (6-4); the hydraulic lines below the rotating joint (7) comprises a motor input hydraulic line (10-1), a motor drainage hydraulic line (10-2), a motor flushing hydraulic line (10-3), and a motor output hydraulic line (10-4); wherein the pump output hydraulic line (6-1), the pump drainage hydraulic line (6-2), the pump flushing hydraulic line (6-3), and the pump input hydraulic line (6-4) above the rotating joint 7 respectively communicate with the motor input hydraulic line (10-1), the motor drainage hydraulic line (10-2), the motor flushing hydraulic line (10-3) and the motor output hydraulic line (10-4) by means of the rotating joint (7); wherein the four hydraulic lines below the rotating joint (7), namely the motor input hydraulic line (10-1), the motor drainage hydraulic line (10-2), the motor flushing hydraulic line (10-3), and the motor output hydraulic line (10-4), can be divided into 2 sets of branches on the ground;
one branch of one set of branches is the motor input hydraulic line (10-1) connected to the primary high-speed variable displacement motor (12), which is a primary circuit; wherein the primary high-speed variable displacement motor (12) of the primary circuit is directly connected to the seawater desalination equipment (13) to drive the seawater desalination equipment; the other branch is the motor input hydraulic line (10-1) connected to the secondary high-speed variable displacement motor (15), which is a secondary circuit; wherein one end of an output shaft of the secondary high-speed variable displacement motor (15) of the secondary circuit is connected to the speed sensor (14), and the other end of the output shaft of the secondary high-speed variable displacement motor (15) is connected to the electric generator (16); the motor flushing hydraulic line(10-3) is connected to the flushing pump set (17), the flushing pump set (17) is responsible for flushing all the primary high-speed variable displacement motor (12), the secondary high-speed variable displacement motor (15) and the low-speed large-displacement hydraulic pump (4); the motor drainage hydraulic line (10-2) is directly connected to the oil tank on the ground, and all return oil of the primary high-speed variable displacement motor (12), the secondary high-speed variable displacement motor (15) and the low-speed large-displacement hydraulic pump (4) is directly returned to the oil tank.

5. The seawater desalination system directly driven by the hydraulic fan according to claim 3, wherein the windward equipment (8) comprises a motor reducer and a set of turbine worms; the motor reducer drives the turbine worms, the turbines are connected to the tower (9) by means of bolts, and the worms are installed in the nacelle (5) together with the motor reducer; when the nacelle (5) needs to be rotated, the motor reducer drives the worms to rotate; when the worms rotate, they will drive the nacelle (5) to rotate relative to the tower (9); when the wind direction changes and the nacelle (5) can rotate on the tower (9), the windward equipment (8) can drive the nacelle (5) to rotate to a best windward angle, keeping the nacelle (5) in a windward direction.
